# EUROPÄISCHE PATENTSCHRIFT

(11) **EP 1 128 750 B1**
(45) Veröffentlichungstag und Bekanntmachung des Hinweises auf die Patenterteilung: **08.12.2004**
(21) Anmeldenummer: 00962334.9
(22) Anmeldetag: 18.08.2000
(51) Int. Cl.: A47F 3/00, F16B 5/06, A47B 47/00, F16B 12/44

(54) **KLEMMBESCHLAG FÜR DIE ECKVERBINDUNG VON DREI ANEINANDER GRENZENDEN WÄNDEN**
CLAMP FITTING FOR A CORNER JOINT BETWEEN THREE MUTUALLY BORDERING WALLS
FERRURE DE SERRAGE POUR LE RACCORD ANGULAIRE DE TROIS PAROIS CONTIGUES

(30) Priorität: 13.09.1999 DE 19943565
(43) Veröffentlichungstag der Anmeldung: 05.09.2001
(73) Patentinhaber: DORMA GmbH + Co. KG, 58256 Ennepetal (DE)
(72) Erfinder: ELMER, Hubert, A-6020 Innsbruck (AT)
(86) Internationale Anmeldenummer: PCT/EP2000/008066
(87) Internationale Veröffentlichungsnummer: WO 2001/019222

(56) Entgegenhaltungen:
- EP-A- 0 784 129
- DE-U- 29 720 336

## Beschreibung

Die Erfindung betrifft einen Klemmbeschlag für die Eckverbindung von drei aneinander grenzenden Wänden, insbesondere Glasplatten oder dergleichen.

Aus der DE 297 20 336 U ist ein Halter zur Verbindung von zwei oder drei Platten bekannt, der ein großräumiges und materialaufwendiges Kupplungsglied in Form eines Armdreieckes aufweist, an dessen Schnittpunkten Gewindebolzen gelagert sind, die starr mit Plattenhaltern verbunden sind. Die starre Anbindung der Plattenhalter an die Gewindebolzen ist unvorteilhaft, da sich Toleranzen, insbesondere winkelige Fehlstellungen der Platten, nicht ausgleichen lassen und demgemäß von Spannungen im Material entstehen, die insbesondere bei der Verwendung von Glas zu Defekten führen können.

Die EP 0 784 129 A1 befasst sich mit einem Klemmbeschlag für die Verbindung von vier aneinander grenzenden in einer gemeinsamen Ebene verlaufenden Glasplatten, also nicht um eine Eckverbindung der hier angesprochenen Gattung. Bei der EP 0 784 129 A1 findet ein Verbindungsglied Verwendung, in dem sich von einem zentralen, den Gebäudeanschluss aufnehmenden Grundkörper vier Arme erstrecken, an deren freien Enden die Glasplatten angeschlossen sind. Der Anschluss der Glasplatten an die freien Enden der Arme erfolgt in bekannter Weise über Glasadapter, wobei zwischen den Glasadaptern und den freien Enden der Arme zum Zwecke des erforderlichen. Toleranzausgleiches linsenförmige Stützkörper angeordnet sind.

Die Erfindung betrifft demgegenüber eine Eckverbindung von drei Wänden, insbesondere Glasplatten, die nicht flächig in einer Ebene verlaufen, sondern in einem Winkel zueinander angeordnet sind, beispielsweise in einem rechten Winkel zueinander stehen. Derartige Eckverbindungen sind beispielsweise bei der Gestaltung großräumiger Glasvitrinen erforderlich.

Dabei sind optisch ansprechende Verbindungselemente wünschenswert; insbesondere müssen die Verbindungsmittel einen Toleranzausgleich zwischen den benachbarten Glasplatten ermöglichen, bedingt beispielsweise durch unterschiedliche Abmessungen der Platten selbst oder durch Abweichungen der in bekannter Weise in den Platten angeordneten Bohrungen oder Ausnehmungen für die Verbindung mit dem jeweiligen Adapter des Klemmbeschlages. Darüber hinaus sollen. mit dem erfindungsgemäßen Klemmbeschlag Eckverbindungen realisiert werden können, bei denen die Wände, bevorzugt Glasscheiben, miteinander verbunden werden können, wenn ihre Relativlage zueinander größere oder kleinere Winkel als 90° einschließt.

Aufgabe der Erfindung ist es, einen Klemmbeschlag der eingangs genannten Gattung vorzuschlagen, welcher die vorgenannten Kriterien erfüllt.

Die Erfindung löst die gestellte Aufgabe durch die Lehre nach Anspruch 1. Weitere Merkmale sind durch die Unteransprüche gekennzeichnet.

Gemäß der technischen Lehre des Anspruches 1 weist der Klemmbeschlag ein zentrales Kupplungsglied mit drei Aufnahmelagern mit darin drehbar und feststellbar gelagerten Verbindungsachsen auf, deren Mittellängsachsen radial zum Kupplungsglied verlaufen und jeweils einen Winkel von etwa 120° zwischen sich einschließen, wobei die Verbindungsachsen an ihrem dem Kupplungsglied abgewandten freien Ende ein verstarrbares Anschlussgelenk für den Anschluss eines Adapters, vorzugsweise eines Glasadapters, aufweisen. Durch die drehbare Lagerung der Verbindungsachsen in den Aufnahmelagern des zentralen Kupplungsgliedes einerseits und die Anordnung des Anschlussgelenkes zwischen den Verbindungsachsen und den Adaptern andererseits werden mit Bezug auf den gesamten Klemmbeschlag praktisch drei Kreuzgelenke geschaffen, die eine vollständige Anpassung des jeweiligen Adapters an anzuschließende Glasplatten ermöglichen, unabhängig von deren Winkelstellungen zueinander. Gleichzeitig können die Stirnkanten der gegeneinander gerichteten Glasplatten exakt justiert werden, wobei nach erfolgter Justierung sowohl die Lage der Verbindungsachse im jeweiligen Aufnahmelager des zentralen Kupplungsgliedes als auch die Stellung des Anschlussgelenkes zwischen der Verbindungsachse und dem Adapter verstarrt werden kann.

Das zentrale Kupplungsglied könnte grundsätzlich aus einer die Aufnahmelager aufweisenden Scheibe bestehen, ist jedoch bevorzugt als Kugel ausgebildet, wobei die Aufnahmelager durch drei unter einem Winkel von etwa 120° versetzte Sackbohrungen gebildet sind.

Die Festlegung der Verbindungsachsen im zentralen Kupplungsglied erfolgt bevorzugt derart, dass jede Verbindungsachse mit einem eine hinterschnittene Nut aufweisenden Achszapfen drehbar im Aufnahmelager des Kupplungsgliedes gelagert und mittels einer in das Kupplungsglied einschraubbaren und in die Nut einfassenden Gewindestiftes festlegbar ist. Auf diese Weise ergibt sich eine optisch ansprechende und einfache Arretierung der Verbindungsachse gegenüber dem zentralen Kupplungsglied.

Das Anschlussgelenk zwischen den Verbindungsachsen und dem Adapter ist in vorteilhafter Ausgestaltung der Erfindung so ausgebildet, dass das Anschlussgelenk der Verbindungsachsen aus einer ein Langloch aufweisenden, in eine Gabel des Adapters einfassenden Lasche besteht. Das Langloch in der Lasche der Verbindungsachsen ermöglicht einen zusätzlichen Toleranzausgleich durch ein jeweilige unterschiedliche Ausgestaltung der Länge der einzelnen Verbindungslaschen vor der Verstarrung des Anschlussgelenkes.

Zur Verstarrung des Anschlussgelenkes ist in weiterer Ausgestaltung der Erfindung vorgesehen, dass ein Gabelschenkel der Gabel des Adapters eine Bohrung mit einem Innengewinde und ein Gabelschenkel eine Senkung für die Aufnahme einer Klemmschraube aufweist.

Im Ergebnis wird mit der Erfindung ein Klemmbeschlag für die Eckverbindung von drei aneinander grenzenden Wänden geschaffen, mit dem nicht nur eine Eckverbindung hoher Festigkeit realisiert wird, sondern der insbesondere geeignet ist, bei ausreichender Möglichkeit zum Toleranzausgleich die Eckverbindung von aneinander grenzenden Platten zu realisieren, wenn diese in unterschiedlichen Winkelstellungen zueinander geneigt sind.

Die Erfindung wird nachfolgend anhand eines Ausführungsbeispieles näher erläutert.

Es zeigen:
- Figur 1:: in einer Gesamtansicht den Klemmbeschlag in perspektivischer Darstellung.
- Figur 2:: Eine perspektivische Ansicht des zentralen Kupplungsgliedes mit den Verbindungsachsen.
- Figur 3:: Eine Draufsicht auf die Darstellung nach Figur 2.
- Figur 4:: Eine perspektivische Draufsicht auf die Darstellung nach Figur 3.
- Figur 5:: Einen Schnitt durch das zentrale Kupplungsglied.
- Figur 6:: Eine Ansicht auf die Verbindungsachse.
- Figur 7:: Eine Draufsicht gemäß Figur 6.
- Figur 8:: Eine perspektivische Darstellung der Verbindungsachse.
- Figur 9:: Einen Schnitt durch den Adapter.
- Figur 10:: Eine Draufsicht auf den Adapter.

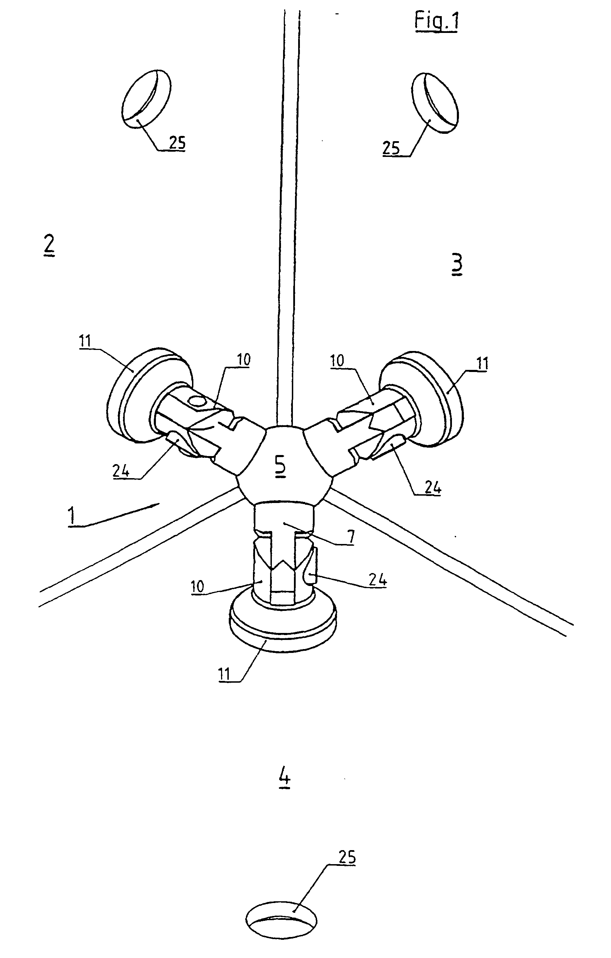

Ein Klemmbeschlag 1 nach Figur 1 verbindet drei im Ausführungsbeispiel im rechten Winkel zueinander stehende Glasplatten 2, 3 und 4. Der Klemmbeschlag 1 weist im Wesentlichen ein zentrales Kupplungsglied 5 auf, an das sich jeweils etwa um 120° versetzt drei Verbindungsachsen 7 anschließen, die drehbar, jedoch feststellbar im zentralen Kupplungsglied 5 gelagert sind. Die in Ausnehmungen 25 der Glasplatten 2, 3 und 4 festgeschraubten Glasadapter 11 sind mit den Verbindungsachsen 7 über Anschlussgelenke 10 verbunden, die mittels einer Klemmschraube 24 verstarrbar sind.

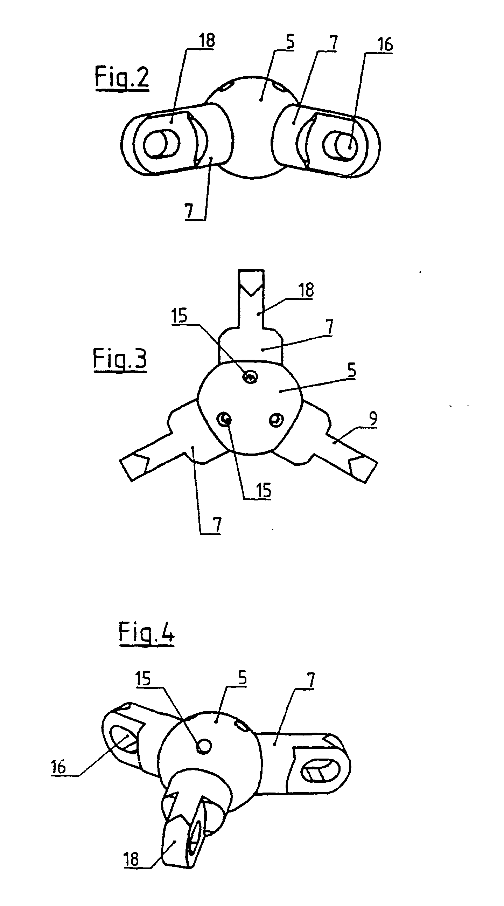

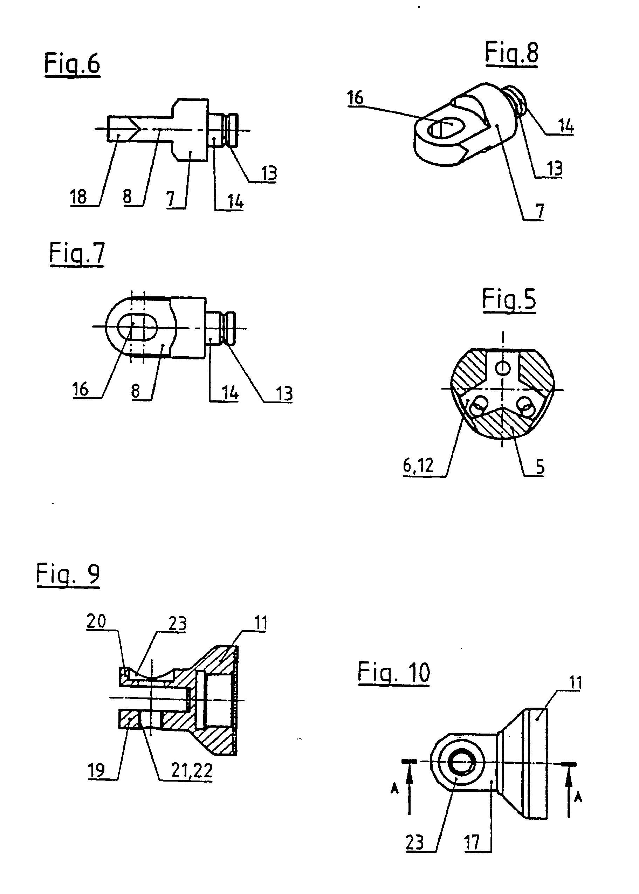

Die Figuren 2 bis 4 lassen erkennen, dass die Feststellbarkeit der Verbindungsachsen 7 gegenüber dem zentralen Kupplungsglied 5 durch in das zentrale Kupplungsglied 5 eingeschraubte Gewindestifte 15 erfolgt. Wie Figur 5 ausweist, sind in dem als Kugel ausgebildeten zentralen Kupplungsglied 5 als Sackbohrungen 12 ausgebildete Aufnahmelager 6 vorgesehen, in die Achszapfen 14 der Verbindungsachsen 7 eingreifen. Die Achszapfen 14 weisen eine hinterschnittene Nut 13 auf, in die die Gewindestifte 15 einschraubbar sind.

Die Figuren 6 bis 8 zeigen, dass das freie Ende 9 der Verbindungsachsen 7 als Lasche 18 ausgebildet ist, deren Mitteltängsachse mit 8 bezeichnet ist. Die Lasche 18 besitzt ein Langloch 16 und fasst ausweislich den Figuren 9 und 10 in eine Gabel 17 des Glasadapters 11 ein. Die Gabel 17 bildet zwei Gabelschenkel 19 und 20, wobei der Gabelschenkel 19 eine mit einem Innengewinde 22 versehene Bohrung 21 besitzt, in die eine Klemmschraube 24 einschraubbar ist. Der Kopf der Klemmschraube 24 (siehe Figur 1) legt sich dabei in eine Senkung 23 des Gabelschenkels 20. Mittels der Klemmschraube 24 kann das Anschlussgelenk verstarrt werden.

### Bezugszeichen

- 1: Klemmbeschlag
- 2: Glasplatte
- 3: Glasplatte
- 4: Glasplatte
- 5: zentrales Kupplungsglied
- 6: Aufnahmelager
- 7: Verbindungsachsen
- 8: Mittellängsachsen der Verbindungsachsen
- 9: freies Ende der Verbindungsachsen
- 10: verstarrbare Anschlußgelenke
- 11: Glasadapter
- 12: Sackbohrungen
- 13: hinterschnittene Nut
- 14: Achszapfen
- 15: Gewindestift
- 16: Langloch
- 17: Gabel
- 18: Lasche
- 19: Gabelschenkel
- 20: Gabelschenkel
- 21: Bohrung
- 22: Innengewinde
- 23: Senkung
- 24: Klemmschraube
- 25: Ausnehmungen

## Patentansprüche

1. Klemmbeschlag für die Eckverbindung von drei aneinander grenzenden Wänden, insbesondere Glasplatten oder dergleichen, wobei der Klemmbeschlag (1) ein zentrales Kupplungsglied (5) mit drei Aufnahmelagern (6) für darin drehbar und feststellbar gelagerte Verbindungsachsen (7) aufweist und wobei die Verbindungsachsen (7) an ihrem dem Kupplungsglied (5) abgewandten freien Ende (9) einen Adapter, vorzugsweise einen Glasadapter (11), aufweisen, **dadurch gekennzeichnet, dass** Mittellängsachsen (8) der Verbindungsachsen (7) radial zum Kupplungsglied (5) verlaufen und jeweils einen Winkel von etwa 120° zwischen sich einschließen und dass die Adapter (11) mittels eines verstarrbaren Anschlussgelenkes (10) an die Verbindungsachsen (7) angeschlossen sind.

2. Klemmbeschlag nach Anspruch 1, **dadurch gekennzeichnet, dass** das Kupplungsglied (5) als Kugel ausgebildet ist.

3. Klemmbeschlag nach Anspruch 1 und 2, **dadurch gekennzeichnet, dass** die Aufnahmelager (6) des Kupplungsgliedes (5) durch drei unter einem Winkel von etwa 120° versetzte Sackbohrungen (20) gebildet sind.

4. Klemmbeschlag nach einem der Ansprüche 1 bis 3, **dadurch gekennzeichnet, dass** die Verbindungsachsen (7) mit einem eine hinterschnittene Nut (13) aufweisenden Achszapfen (14) drehbar im Aufnahmelager (6) des Kupplungsgliedes (5) gelagert und mittels einer in das Kupplungsglied (5) einschraubbaren und in die Nut (13) einfassenden Gewindestiftes (15) feststellbar sind.

5. Klemmbeschlag nach einem der Ansprüche 1 bis 4, **dadurch gekennzeichnet, dass** das Anschlussgelenk (10) der Verbindungsachsen (7) aus einer ein Langloch (16) ausweisenden, in eine Gabel (17) des Adapters (11) einfassenden Lasche (18) besteht.

6. Klemmbeschlag nach einem der Ansprüche 1 bis 5, **dadurch gekennzeichnet, dass** ein Gabelschenkel (19) der Gabel (17) des Adapters (11) eine Bohrung (21) mit einem Innengewinde (22) und ein Gabelschenkel (20) eine Senkung (23) für die Aufnahme einer Klemmschraube (24) aufweist.

## Claims

1. A clamping fitting for the corner connection of three adjoining walls, particularly glass panes or the like, the clamping fitting (1) presenting a central coupling member (5) with three locating bearings (6) designed for connecting axles (7) that are rotatably supported and may be locked therein, and the connecting axles (7), at their free end opposite to the coupling member (5), presenting an adapter element, preferably a glass adapter element (11), **characterized in that** the center longitudinal axes (8) of the connecting axles (7) radially extend with regard to the coupling member (5) and include an angle of approximately 120 degrees between each other, respectively, and **in that** the adapter elements (11) are connected to the connecting axles (7) by means of of a stiffening connector articulation (10).

2. A clamping fitting according to claim 1, **characterized in that** the coupling member (5) is executed as a sphere.

3. A clamping fitting according to claim 1 and 2, **characterized in that** the locating bearings (6) of the coupling member (5) are realized through three pocket borings (20), which are offset by an angle of approximately 120 degrees.

4. A clamping fitting according to one of the claims 1 to 3, **characterized in that** the connecting axles (7) are rotatably supported in the locating bearing (6) of the coupling member (5) by means of an axle journal (14) presenting an undercut groove (13) and are lockable by means of a headless set screw (15), which is screwable into the coupling member (5) and engages into the groove (13).

5. A clamping fitting according to one of the claims 1 to 4, **characterized in that** the connector articulation (10) of the connecting axles (7) consists of a bracket (18) presenting an oblong hole (16) and engaging into a fork (17) of the adapter element (11).

6. A clamping fitting according to one of the claims 1 to 5, **characterized in that** a fork leg (19) of the fork (17) of the adapter element (11) presents a boring (21) with a female thread (22) and **in that** a fork leg (20) presents an indentation (23) for the reception of a clamp screw (24).

## Revendications

1. Ferrure de serrage pour la connexion angulaire de trois parois adjacentes, particulièrement des panneaux en verre ou similaire, la ferrure de serrage (1) présentant un organe d'accouplement (5) central comprenant trois paliers (6) de réception d'essieux de connexion (7), qui y sont logés de façon tournante et pouvant être bloqués, et les essieux de connexion (7) présentant, à leur extrémité libre (9) opposée à l'organe d'accouplement (5), un élément adaptatif, de préférence un élément adaptatif pour vitrage (11 ), **caractérisée en ce que** les axes longitudinaux centraux (8) des essieux de connexion (7) s'étendent radialement par rapport à l'organe d'accouplement (5) et forment entre eux respectivement un angle d'environ 120° et **en ce que** les éléments adaptatifs (11) sont raccordés aux essieux de connexion (7) par l'intermédiaire d'une articulation de raccordement (10) qui peut être rigidifiée.

2. Ferrure de serrage selon la revendication- 1, **caractérisée en ce que** l'organe d'accouplement (5) est constitué en forme de sphère.

3. Ferrure de serrage selon la revendication 1 et 2, **caractérisée en ce que** les paliers de réception (6) de l'organe d'accouplement (5) sont constitués par trois trous borgnes (20) décalés d'un angle d'environ 120°.

4. Ferrure de serrage selon l'une des revendications 1 à 3, **caractérisée en ce que** les essieux de connexion (7) sont logés de façon tournante dans un palier de réception (6) de l'organe d'accouplement (5) avec un tourillon (14) présentant une rainure (13) contre-dépouillée, et peuvent être bloqués par l'intermédiaire d'une tige filetée (15) pouvant être vissée dans l'organe d'accouplement (5) et pouvant s'engager dans la rainure (13).

5. Ferrure de serrage selon l'une des revendications 1 à 4, **caractérisée en ce que** l'articulation de raccordement (10) des essieux de connexion (7) consiste en une attache (18) présentant un trou oblong (16), s'engageant dans un enfourchement (17) de l'élément adaptatif (11).

6. Ferrure de serrage selon l'une des revendications 1 à 5, **caractérisée en ce qu'**une branche (19) de l'enfourchement (17) de l'élément adaptatif (11) présente un perçage (21) pourvu d'un taraudage (22) et qu'une branche (20) présente une dépression (23) pour la réception d'une vis de serrage (24).
